(19) **Europäisches Patentamt**
**European Patent Office**
**Office européen des brevets**

(11) **EP 3 483 038 B1**

(12) **EUROPÄISCHE PATENTSCHRIFT**

(45) Veröffentlichungstag und Bekanntmachung des Hinweises auf die Patenterteilung:
**09.12.2020 Patentblatt 2020/50**

(51) Int Cl.:
**B62D 6/00** (2006.01)     **B62D 7/15** (2006.01)
**B60W 30/045** (2012.01)

(21) Anmeldenummer: **18201015.7**

(22) Anmeldetag: **17.10.2018**

(54) **VERFAHREN ZUR STEUERUNG EINER HINTERACHSLENKUNG EINES KRAFTFAHRZEUGS**

METHOD FOR CONTROLLING REAR AXLE STEERING OF A MOTOR VEHICLE

PROCÉDÉ DE COMMANDE D'UNE DIRECTION D'ESSIEU ARRIÈRE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2017 DE 102017219881**

(43) Veröffentlichungstag der Anmeldung:
**15.05.2019 Patentblatt 2019/20**

(73) Patentinhaber: **AUDI AG**
**85045 Ingolstadt (DE)**

(72) Erfinder:
• **Obermüller, Anton**
**85053 Ingolstadt (DE)**
• **Mihailescu, Adrian**
**85057 Ingolstadt (DE)**
• **Hartinger, Ferdinand**
**80799 München (DE)**
• **Diepold, Klaus**
**86156 Augsburg (DE)**
• **Enning, Martin**
**85049 Ingolstadt (DE)**
• **Wiedenmann, Christian**
**85049 Ingolstadt (DE)**
• **Ortlechner, Michael**
**85057 Ingolstadt (DE)**
• **Lehmann, Matthias**
**85356 Freising (DE)**

(56) Entgegenhaltungen:
**EP-A2- 0 510 365     DE-A1-102004 036 565**

**Beschreibung**

Die Erfindung betrifft ein Verfahren zur Steuerung einer Hinterachslenkung eines Kraftfahrzeugs, wobei ein Lenkwinkel von Rädern der Hinterachse eingestellt wird, sowie eine Vorrichtung zur Durchführung des Verfahrens.

Aus Sicherheitsgründen werden die aktuellen Serienfahrzeuge grundsätzlich untersteuernd ausgelegt. Bei einer Kurvenfahrt im querdynamischen Grenzbereich ist dabei der Schräglaufwinkel an der Hinterachse geringer als der Schräglaufwinkel an der Vorderachse, was ein unkontrolliertes Eindrehen des Fahrzeugs verhindert und es für den Fahrer beherrschbar macht.

Kraftfahrzeuge mit einer Hinterrad- bzw. Hinterachslenkung können das dynamische Verhältnis der Schräglaufwinkel zwischen der Vorder- und der Hinterachse stark beeinflussen. Bei einer Lenkbewegung der Hinterachse proportional gegensinnig zur Vorderachse wird das Fahrverhalten in Richtung Übersteuern verändert. Bei einer gleichsinnigen Lenkbewegung verschiebt sich das Fahrverhalten dagegen in Richtung Untersteuern.

Wenn im querdynamischen Grenzbereich gelenkt, insbesondere überlenkt, wird, erreicht die Vorderachse als erste den Schräglaufwinkel mit der maximalen Seitenkraft. Eine Erhöhung des Lenkwinkels, also ein Überlenken, führt danach zu einer Absenkung der Seitenkraft der Vorderachse. An der Hinterachse ist zu diesem Zeitpunkt der Schräglaufwinkel der maximalen Seiten kraft jedoch noch nicht erreicht, so dass eine gleichsinnige Lenkbewegung der Hinterachse zu einer Erhöhung der Seitenkraft an der Hinterachse führt. Die Hinterachslenkung fügt der vorhandenen Seitenkraft also eine zusätzliche Seitenkraft hinzu. Das Fahrverhalten wird dadurch stark untersteuernd und kann im Extremfall zur Geradeausfahrt und somit zum Verlassen der Fahrbahn führen.

Analog dazu führt eine übermäßige gegensinnige Lenkbewegung der Hinterachslenkung im Grenzbereich zu einer Reduktion der Seitenkräfte an der Hinterachse. Das Fahrverhalten wird dadurch stark übersteuernd und kann im Extremfall zum extremen Eindrehen des Kraftfahrzeugs und zum Kontrollverlust führen.

Die maximal möglichen Schräglaufwinkel sind abhängig vom Fahrbahnreibwert, also des Haftpotenzials der Fahrbahn. Auf rutschigem Untergrund, wie zum Beispiel auf einer verschneiten oder vereisten Straße, ist der maximale Schräglaufwinkel deutlich früher erreicht als auf trockenem Asphalt.

Aus der EP 0 510 365 A2 sind ein gattungsgemäßes Verfahren und eine entsprechende Vorrichtung zur Steuerung einer Hinterachslenkung eines Kraftfahrzeugs bekannt. Dabei wird mittels einer Feedback-Regelung, die auf der Gierrate des Kraftfahrzeugs basiert, eine Regelung des Lenkwinkels vorgenommen.

In der DE 10 2010 036 619 A1 ist ein Verfahren zum Betreiben eines Lenksystems bei einem Kraftfahrzeug beschrieben, das eine Hinterachslenkung aufweist. Dabei wird ein Schräglaufwinkel der Vorderachse durch Lenken der Hinterachse derart beeinflusst, dass dieser über einen Lenkradwinkelbereich konstant bleibt.

Die US 2008/0109133 A1 beschreibt ein Verfahren zur Begrenzung des Reifenschlupfwinkels in einem Lenksteuersystem für ein Kraftfahrzeug, bei dem ein erster Lenkvergrößerungswinkel aus einer Fahrzeuggeschwindigkeit und einem Lenkradwinkel berechnet wird. Des Weiteren werden eine obere Grenzwinkelgrenze und eine untere Grenzwinkelgrenze als Funktionen eines Fahrzeugschlupfwinkels und einer Reifenschlupfwinkelgrenze berechnet. Die Summe des Lenkradwinkels und des ersten Lenkvergrößerungswinkels zwischen der oberen Grenzwinkelgrenze und der unteren Grenzwinkelgrenze wird berechnet, um einen ersten begrenzten Winkel zu erzeugen. Des Weiteren wird die Summe aus dem Handradwinkel und dem ersten Lenkvergrößerungswinkel von dem ersten Begrenzungswinkel subtrahiert, um eine erste Begrenzungsfunktion zu erzeugen, und ein Motorwinkelbefehl wird durch Addieren der ersten Begrenzungsfunktion und dem ersten Lenkvergrößerungswinkel erzeugt.

Es ist Aufgabe der vorliegenden Erfindung, ein Verfahren zur Steuerung einer Hinterachslenkung eines Kraftfahrzeugs zu schaffen, mit der die Fahrsicherheit erhöht werden kann.

Gemäß der vorliegenden Erfindung wird also bei Erreichen einer bestimmten Querbeschleunigung des Kraftfahrzeugs in Abhängigkeit des Reibwerts der Fahrbahnoberfläche der Lenkwinkel der Räder der Hinterachse begrenzt wird. Mit anderen Worten, es wird die vorgesteuerte Lenkbewegung der Hinterachse im querdynamischen Grenzbereich in Abhängigkeit des Fahrbahnreibwerts und der Reibwertausnutzung auf maximal zulässige Winkel begrenzt. Eine solche reibwertadaptive Begrenzung der vorgesteuerten Hinterachslenkwinkel bzw. -winkelgradienten und damit eine Begrenzung der Lenkbewegung der Hinterachse im Bereich des maximalen Schräglaufwinkels derselben verhindert unerwünschte Lenkbewegungen und damit die Entstehung von Unter- bzw. Übersteuern und führt somit zu einer wesentlich erhöhten Fahrsicherheit.

Wenn in einer sehr vorteilhaften Weiterbildung der Erfindung der Lenkwinkel bei Unterschreiten eines bestimmten Reibwerts der Fahrbahnoberfläche begrenzt wird, so wird dem Umstand Rechnung getragen, dass die beschriebene Problematik gerade beim Fahren auf Fahrbahnoberflächen mit einem niedrigen Reibwert auftritt.

Des Weiteren kann vorgesehen sein, dass der Lenkwinkel der Räder der Hinterachse mittels einer Lenkwinkelstelleinrichtung eingestellt wird, was eine sehr einfache Durchführung des Verfahrens sicherstellt.

Besonders vorteilhaft ist es, wenn zusätzlich auch der Gradient des Lenkwinkels begrenzt wird.

Wenn die Begrenzung des Lenkwinkels der Räder der Hinterachse in Abhängigkeit einer Fahrgeschwindigkeit des Kraftfahrzeugs durchgeführt wird, ergibt sich eine Erhöhung der Fahrsicherheit des Kraftfahrzeugs.

Eine Vorrichtung zur Durchführung des Verfahrens ist in Anspruch 6 angegeben.

Mit einer solchen Vorrichtung kann das erfindungsgemäße Verfahren auf sehr einfache Weise durchgeführt werden.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:

Fig. 1     eine schematische Draufsicht auf ein Kraftfahrzeug mit einer Vorrichtung zur Steuerung einer Hinterachslenkung;

Fig. 2     ein Diagramm, in dem die Reifenseitenkraft über dem Schräglaufwinkel aufgetragen ist; und

Fig. 3     ein Diagramm, in dem der Hinterachslenkwinkel über der Sollquerbeschleunigung aufgetragen ist.

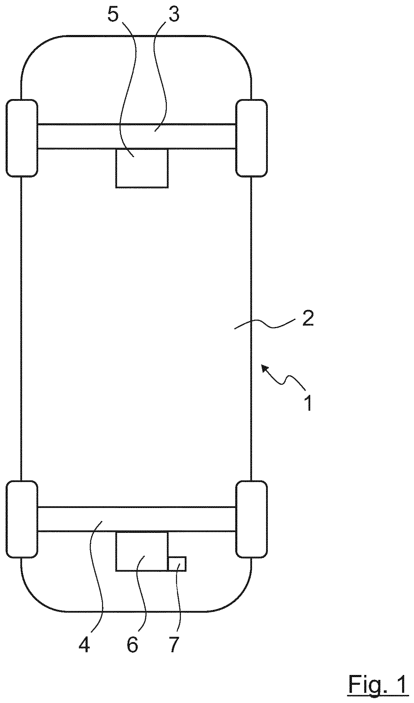

Fig. 1 zeigt auf sehr schematische Weise ein Kraftfahrzeug 1, das in an sich bekannter Weise eine Karosserie 2, eine Vorderachse 3 und eine Hinterachse 4 aufweist. Im vorliegenden Fall handelt es sich sowohl bei der Vorderachse 3 als auch bei der Hinterachse 4 um gelenkte Achsen. Die Art und Weise, wie die Vorderachse 3 und die Hinterachse 4 gelenkt werden, wird hierin nicht ausführlich beschrieben. Es sind jedoch, ebenfalls sehr schematisch, jeweilige Lenksysteme angedeutet, die der Vorderachse 3 bzw. der Hinterachse 4 zugeordnet sind, und mit denen die Vorderachse 3 und die Hinterachse 4 gelenkt werden. Das Lenksystem der Vorderachse 3 wird dabei als Vorderachslenkung 5 und das Lenksystem der Hinterachse 4 als Hinterachslenkung 6 bezeichnet. Die Vorderachslenkung 5 ist dabei grundsätzlich unabhängig von der Hinterachslenkung 6, es können allerdings bestimmte Abhängigkeiten hergestellt werden, die jedoch nicht mechanischer, sondern elektronischer Art sind.

Die Hinterachslenkung 6 weist eine Lenkwinkelstelleinrichtung 7 auf, die grundsätzlich dazu dient, einen gewünschten Lenkwinkel der Räder der Hinterachse 4 einzustellen. Die Lenkwinkelstelleinrichtung 7 nimmt hierzu zunächst einen über eine nicht dargestellte Lenkhandhabe eingegebenen Fahrerwunsch auf und verarbeitet denselben zu dem jeweiligen Lenkwinkel der Hinterachse 4 bzw. der Räder der Hinterachse 4.

Des Weiteren ist die Lenkwinkelstelleinrichtung 7 jedoch auch in der Lage, aus bestimmten, nachfolgend beschriebenen Gründen von dem per Lenkhandhabe eingegebenen Fahrerwunsch abzuweichen. So ist mit der Lenkwinkelstelleinrichtung 7 bei Erreichen einer vorbestimmten Querbeschleunigung des Kraftfahrzeugs 1 in Abhängigkeit eines Reibwerts einer nicht dargestellten Fahrbahnoberfläche, auf dem sich das Kraftfahrzeug 1 bewegt, der Lenkwinkel und gegebenenfalls auch der Gradient des Lenkwinkels der Räder der Hinterachse 4 begrenzbar.

Bei einem Verfahren zur Steuerung der Hinterachslenkung 6 des Kraftfahrzeugs 1 wird der Lenkwinkel von Rädern der Hinterachse 4 eingestellt. Bei Erreichen einer vorbestimmten Querbeschleunigung des Kraftfahrzeugs 1 wird in Abhängigkeit des Reibwerts der Fahrbahnoberfläche der Lenkwinkel und gegebenenfalls auch der Gradient des Lenkwinkels der Räder der Hinterachse 4 begrenzt. Dieses Verfahren kann von einer in ihrer Gesamtheit nicht dargestellten Vorrichtung durchgeführt werden, zu der unter anderem auch die Lenkwinkelstelleinrichtung 7 gehört. Vorzugsweise wird der Lenkwinkel und gegebenenfalls auch der Gradient des Lenkwinkels bei Unterschreiten eines bestimmten Reibwerts der Fahrbahnoberfläche begrenzt.

Demnach kann entweder nur der Lenkwinkel oder sowohl der Lenkwinkel als auch der Gradient des Lenkwinkels begrenzt werden. Letzteres ist dabei zu bevorzugen.

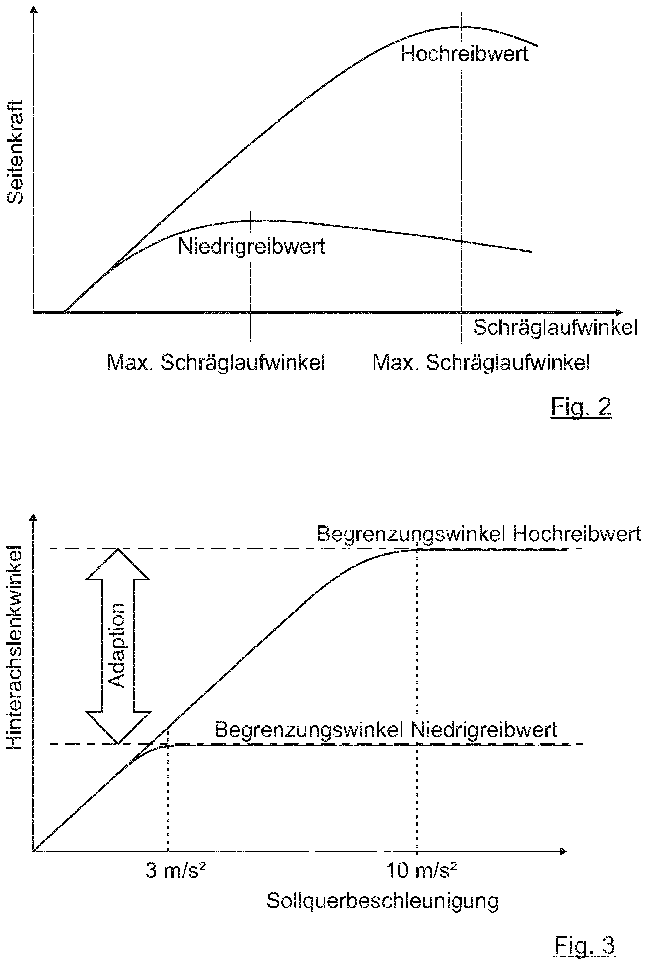

Fig. 2 zeigt ein Kennfeld bzw. ein Diagramm, in dem die Reifenseitenkraft über dem Schräglaufwinkel aufgetragen ist. Dabei ist zu erkennen, dass auf einer Fahrbahnoberfläche, die einen niedrigen Reibwert aufweist, also zum Beispiel eine verschneite oder vereiste Straße, die maximale Reifenseitenkraft bei einem erheblich niedrigeren Schräglaufwinkel erreicht wird als auf einer Fahrbahnoberfläche, die einen hohen Reibwert aufweist. Der maximal mögliche Schräglaufwinkel ist also vom Reibwert der Fahrbahnoberfläche abhängig.

Das oben beschriebene Verfahren, bei dem der Lenkwinkel und gegebenenfalls auch der Gradient des Lenkwinkels der Räder der Hinterachse 4 begrenzt wird, wird aus den nachfolgend erläuterten Gründen durchgeführt: Beim Lenken im querdynamischen Grenzbereich erreicht die Vorderachse 3 des Kraftfahrzeugs 1 zuerst den Schräglaufwinkel mit der maximalen Seitenkraft. Eine Erhöhung des Lenkwinkels, also ein Überlenken, führt danach zu einer Absenkung der Seitenkraft der Vorderachse 3. An der Hinterachse 4 ist zu diesem Zeitpunkt der Schräglaufwinkel der maximalen Seiten kraft jedoch noch nicht erreicht, so dass eine gleichsinnige Lenkbewegung der Hinterachse 4 zu einer Erhöhung der Seitenkraft an der Hinterachse 4 führt. Das Fahrverhalten wird dadurch stark untersteuernd und kann im Extremfall zur Geradeausfahrt und somit zum Verlassen der Fahrbahn führen. In ähnlicher Weise führt eine übermäßige gegensinnige Lenkbewegung der Hinterachslenkung 6 im Grenzbereich zu einer Reduktion der Seitenkräfte an der Hinterachse 4. Das Fahrverhalten wird dadurch stark übersteuernd und kann im Extremfall zum extremen Eindrehen des Kraftfahrzeugs 1 und zum Kontrollverlust führen.

Fig. 3 zeigt ein Diagramm, in dem der Hinterachslenkwinkel über der Sollquerbeschleunigung aufgetragen ist.

Die Begrenzung des Gradienten des Lenkwinkels der Räder der Hinterachse 4 bzw. des Gradienten des Hinterachslenkwinkels kann wie nachfolgend beschrieben ermittelt werden:

Zur genauen Ermittlung des Fahrzustandes mit maximal erlaubtem Schräglaufwinkel auf jedem Fahrbahnuntergrund wird die Reibwertausnutzung wie folgt definiert:

$$\mu_{Ausnutzung} = absolut(ay_{Soll}) / (\mu \cdot g).$$

Der Wertebereich ist auf [0 1] begrenzt, g ist die Gravitationskonstante und $\mu$ der geschätzte Fahrbahnreibwert. Die Sollquerbeschleunigung ergibt sich aus dem Lenkradwinkelsensor $Delta_{LWI}$ oder der gemessenen Zahnstangenposition der Vorderachslenkung 5 $Delta_{EPS}$. Eine beispielhafte Berechnung dafür könnte wie folgt aussehen:

$$ay_{Soll} = Delta_{LWI} / \text{mechanische Lenkübersetzung} \cdot \text{Fahrgeschwindigkeit} \cdot$$

$$\text{Gierverstärkung}$$

oder

$$ay_{Soll} = Delta_{EPS} \cdot \text{Fahrgeschwindigkeit} \cdot \text{Gierverstärkung}$$

Die Gierverstärkung beschreibt den Zusammenhang zwischen Radlenkwinkel und Gierrate des Kraftfahrzeugs 1.

Der maximale Gradient der Hinterachslenkbewegung d_ $Delta_{HA}$ hängt von $\mu_{Ausnutzung}$ ab. Bei einer Reibwertausnutzung von 1 soll der erlaubte Gradient auf 0 °/s sinken, um eine weitere Lenkbewegung zu verhindern. Ein kontinuierlicher Abfall des Gradienten, also eine stetige Differenzierbarkeit, ist dabei vorteilhaft. Dies ist in Fig. 3 durch den runden Verlauf der Kurve in die jeweilige Grenze verdeutlicht.

Die Begrenzung des Lenkwinkels der Räder der Hinterachse 4 bzw. des absoluten Hinterachslenkwinkels kann wie nachfolgend beschrieben ermittelt werden:

Im Idealfall wird das Schräglaufwinkelmaximum der Reifen an der Hinterachse 4 bei einer Fahrt mit der auf der jeweiligen Fahrbahnoberfläche maximal möglichen Querbeschleunigung nicht überschritten. Der begrenzende maximale Hinterachslenkwinkel entspricht somit dem Hinterachslenkwinkel bei der Sollquerbeschleunigung, die das Haftpotenzial der Fahrbahnoberfläche wiedergibt.

Der stationäre Hinterachslenkwinkel ergibt sich grundsätzlich aus dem Lenkradwinkelsensor $Delta_{LWI}$ oder der gemessenen Zahnstangenposition der Vorderachslenkung $Delta_{EPS}$. Eine beispielhafte Berechnung dafür könnte wie folgt aussehen:

$$Delta_{HA} = Delta_{EPS} * Lenkübersetzung_{HA}$$

oder

$$Delta_{HA} = Delta_{LWI} / \text{mechanische Lenkübersetzung} * Lenkübersetzung_{HA}$$

Die $Lenkübersetzung_{HA}$ ist ein Applikationswert für die Charakteristik der Hinterachslenkung 6.

Die maximale Querbeschleunigung ergibt sich aus dem Reibwertpotenzial $\mu$ mit der Gravitationskonstanten g wie folgt:

$$ay_{MAX} = \mu * g$$

Aus den oben genannten Gleichungen lässt sich der maximale Hinterachslenkwinkel wie folgt berechnen:

$$\text{Delta}_{HA,MAX} = (\mu \cdot g \cdot \text{Lenkübersetzung}_{HA}) / (\text{Fahrgeschwindigkeit} \cdot \text{Gierverstärkung})$$

Es ist ersichtlich, dass zur Durchführung des beschriebenen Verfahrens der Reibwerts $\mu$ der Fahrbahnoberfläche zumindest näherungsweise bekannt sein sollte. Zur Bestimmung desselben kann auf bekannte Vorgehensweisen zurückgegriffen werden, wie zum Beispiel der Schätzung anhand der Abweichung der gemessenen Bewegungsgrößen, wie z. B. Gierrate und/oder Querbeschleunigung, von den modellbasierten Sollgrößen, Schätzung anhand der Radschlüpfe, Schätzung aus Lenkmomenten, Informationen aus einer Car2X-Kommunikation. Hierzu können an dem Kraftfahrzeug 1 bereits vorhandene Sensoren eingesetzt werden.

Alle hierin beschriebenen Funktionen können in ihrer Verstärkung beispielsweise über der Fahrgeschwindigkeit, dem Lenkradwinkel, der Lenkradgeschwindigkeit, in kritischen Fahrsituationen wie Über- und Untersteuern oder in Abhängigkeit vom gewählten Fahrprofil angepasst werden.

## Patentansprüche

1. Verfahren zur Steuerung einer Hinterachslenkung (6) eines Kraftfahrzeugs (1), wobei ein Lenkwinkel von Rädern einer Hinterachse (4) eingestellt wird,
**dadurch gekennzeichnet, dass**
bei Erreichen einer vorbestimmten Querbeschleunigung des Kraftfahrzeugs (1) in Abhängigkeit eines Reibwerts einer Fahrbahnoberfläche, auf dem sich das Kraftfahrzeug (1) bewegt, der Lenkwinkel der Räder der Hinterachse (4) begrenzt wird.

2. Verfahren nach Anspruch 1,
**dadurch gekennzeichnet, dass**
der Lenkwinkel bei Unterschreiten eines bestimmten Reibwerts der Fahrbahnoberfläche begrenzt wird.

3. Verfahren nach Anspruch 1 oder 2,
**dadurch gekennzeichnet, dass**
der Lenkwinkel der Räder der Hinterachse (4) mittels einer Lenkwinkelstelleinrichtung (7) eingestellt wird.

4. Verfahren nach Anspruch 1, 2 oder 3,
**dadurch gekennzeichnet, dass**
zusätzlich auch der Gradient des Lenkwinkels begrenzt wird.

5. Verfahren nach einem der Ansprüche 1 bis 4,
**dadurch gekennzeichnet, dass**
die Begrenzung des Lenkwinkels der Räder der Hinterachse (4) in Abhängigkeit einer Fahrgeschwindigkeit des Kraftfahrzeugs (1) durchgeführt wird.

6. Vorrichtung zur Durchführung des Verfahrens nach einem der Ansprüche 1 bis 5, mit einer Lenkwinkelstelleinrichtung (7), mit welcher bei Erreichen einer vorbestimmten Querbeschleunigung des Kraftfahrzeugs (1) in Abhängigkeit eines Reibwerts einer Fahrbahnoberfläche, auf dem sich das Kraftfahrzeug (1) bewegt, der Lenkwinkel der Räder der Hinterachse (4) begrenzbar ist.

## Claims

1. Method for controlling a rear axle steering system (6) of a motor vehicle (1), wherein a steering angle of wheels of a rear axle (4) is set, **characterised in that** when a predetermined lateral acceleration of the motor vehicle (1) is reached as a function of a friction value of a road surface, on which the motor vehicle (1) is moving, the steering angle of the wheels of a rear axle (4) is limited.

2. Method according to claim 1, **characterised in that** the steering angle is limited when the road surface falls below a certain friction value.

3. Method according to claim 1 or 2, **characterised in that** the steering angle of the wheels of the rear axle (4) is set by means of a steering angle setting apparatus (7).

4. Method according to claim 1, 2 or 3, **characterised in that** the gradient of the steering angle is also limited.

5. Method according to any of claims 1 to 4, **characterised in that** limiting the steering angle of the wheels of the rear axle (4) is implemented as a function of a driving speed of the motor vehicle (1).

6. Device for implementing the method according to any of claims 1 to 5, with a steering angle setting apparatus (7), with which, when a predetermined lateral acceleration of the motor vehicle (1) is reached as a function of a friction value of a road surface, on which the motor vehicle (1) is moving, the steering angle of the wheels of the rear axle (4) is limited.

**Revendications**

1. Procédé de commande d'une direction d'essieu arrière (6) d'un véhicule automobile (1), dans lequel un angle de braquage de roues d'un essieu arrière (4) est réglé,
**caractérisé en ce que**
lorsqu'une accélération transversale prédéterminée du véhicule automobile (1) est atteinte, l'angle de braquage des roues de l'essieu arrière (4) est délimité en fonction d'un coefficient de friction d'une surface de chaussée, sur laquelle le véhicule automobile (1) se déplace.

2. Procédé selon la revendication 1,
**caractérisé en ce que**
l'angle de braquage est délimité en cas de sous-passement d'un coefficient de friction déterminé de la surface de chaussée.

3. Procédé selon la revendication 1 ou 2,
**caractérisé en ce que**
l'angle de braquage des roues de l'essieu arrière (4) est réglé au moyen d'un dispositif de réglage d'angle de braquage (7).

4. Procédé selon la revendication 1, 2 ou 3,
**caractérisé en ce que**
en plus aussi le gradient de l'angle de braquage est délimité.

5. Procédé selon l'une quelconque des revendications 1 à 4,
**caractérisé en ce que**
la délimitation de l'angle de braquage des roues de l'essieu arrière (4) est effectuée en fonction d'une vitesse de conduite du véhicule automobile (1).

6. Dispositif de réalisation du procédé selon l'une quelconque des revendications 1 à 5, avec un dispositif de réglage d'angle de braquage (7), avec lequel lorsqu'une accélération transversale prédéterminée du véhicule automobile (1) est atteinte, l'angle de braquage des roues de l'essieu arrière (4) peut être délimité en fonction d'un coefficient de friction d'une surface de chaussée, sur laquelle le véhicule automobile (1) se déplace.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0510365 A2
- DE 102010036619 A1
- US 20080109133 A1